# EUROPEAN PATENT APPLICATION

(11) **EP 4 706 945 A1**
(43) Date of publication of application: **11.03.2026**
(21) Application number: 24198375.8
(22) Date of filing: 04.09.2024
(51) Int. Cl.: B29C 70/30, B29C 33/30, B29C 70/54, B29D 99/00, B32B 5/26, F03D 1/06

(54) **SPAR CAP FOR A WIND TURBINE ROTOR BLADE, SET FOR MANUFACTURING A HALF SHELL OF A WIND TURBINE ROTOR BLADE, ASSEMBLY COMPRISING A SPAR CAP AND A MOLD, AND METHOD OF MANUFACTURING A HALF SHELL OF A WIND TURBINE ROTOR BLADE**

(71) Applicant: Nordex Energy SE & Co. KG, 22419 Hamburg (DE); Nordex Blade Technology Centre ApS, 5771 Stenstrup (DK)
(72) Inventor: Tesching, Tobias, 22419 Hamburg (DE); Sørensen, Flemming, 5771 Stenstrup (DK); Hubald, Mathias, 22419 Hamburg (DE); Raschen, Tobias, 22419 Hamburg (DE)
(74) Representative: Völkl Siebenson Patentanwälte - Partnerschaft mbB

(57) **Abstract**

The present invention concerns a apar cap (140) for a wind turbine rotor blade (110), comprising a stack (141) of fiber material layers, which are stacked in a stacking direction (147) from a bottom face (143) to a top face (144), and a clipping layer (145) which is arranged on the top face (144) of the stack (141), wherein the clipping layer (145) protrudes beyond the stack (141) of fiber material layers in a lateral direction (148) which is perpendicular to the stacking direction (147). Further aspects concern a set for manufacturing a half shell of a wind turbine rotor blade, an assembly comprising a spar cap and a mold, and a method of manufacturing a half shell of a wind turbine rotor blade.

## Description

The invention concerns a spar cap for a wind turbine rotor blade, a set for manufacturing a half shell of a wind turbine rotor blade, an assembly comprising a spar cap and a mold, and a method of manufacturing a half shell of a wind turbine rotor blade.

Wind turbines with wind turbine rotor blades are widely known from the state of the art and are used to convert wind energy into electrical energy. Wind turbine rotor blades are usually manufactured in an aerodynamic shell design and comprise several components made of fiber-reinforced laminate, such as an aerodynamic shell. Typically, a wind turbine rotor blade has an elongated design, having a root for attaching the blade to the rotor hub. The wind turbine rotor blade extends from the root to a tip. Typically, two half shells are produced, which are placed on top of each other after their respective manufacture and bonded together to produce the wind turbine rotor blade. The half shells themselves may be segmented for manufacturing a so-called split blade or segmented blade.

Typically, the elongated wind turbine rotor blade varies its cross-sectional shape widely over its length. The cylindrical root section changes to a flattened air-foil cross-section, which gets smaller and smaller towards the tip. The wind turbine rotor blade has a leading edge and a trailing edge at opposite sides. Especially the shape of the trailing edge varies significantly over the body length.

It is necessary to provide reinforcement structures at or within the wind turbine rotor blade for providing the respectively needed stiffness in view of the loads acting on the rotor blade. A high stiffness in the edge region is required, also in the region of the trailing edge, which, as mentioned, varies its shape and thickness significantly. For stiffening the trailing edge region, one or more spar caps comprising many separate fiber layers are arranged and respectively integrated in the half shells of the wind turbine rotor blade. The design of these spar carps in view of their required mechanical properties or stiffness is challenging, as the spar cap thickness is constrained by the limited space near the trailing edge. Thus, the integration of the spar caps is difficult.

A precise placement of the spar cap near the trailing edge is crucial regarding the structural integrity, the performance, and the efficiency of the wind turbine rotor blade.

It is an object of the invention to provide an improved spar cap.

This object is achieved by the independent claims. Advantageous embodiments are given in the sub-claims.

According to a first aspect, a spar cap for a wind turbine rotor blade is proposed which comprises a stack of fiber material layers and a clipping layer. The fiber material layers are stacked in the stack in a stacking direction from a bottom face to a top face. The clipping layer is arranged on the top face of the stack. The clipping layer protrudes beyond the stack of fiber material layers in a lateral direction which is perpendicular to the stacking direction.

The clipping layer, in particular the protruding part of the clipping layer, is configured to be used to fix the spar cap in a mold, thereby allowing to place the spar cap in the mold with a high precision. Any unintentional movements of the spar cap relative to a layup surface of the mold after the placement of the spar cap in the mold can be prevented by fixing the protruding part of the clipping layer. Accordingly, the inventive spar cap is configured to be placed in the mold with a high precision, thereby allowing to construct a half shell of a wind turbine rotor blade in which the spar cap is placed with a high precision.

The spar cap can be one of the main load-bearing components in the rotor blade, designed to withstand bending moments and shear forces. A precise placement of the spar cap ensures that the loads are distributed correctly along the rotor blade. On the other hand, an incorrect placement of the spar cap can lead to an uneven load distribution, resulting in stress concentrations and potential structural failures such as cracks or delamination.

The spar cap helps to maintain the aerodynamic shape of the rotor blade. A precise placement of the spar cap ensures that the rotor blade retains its designed airfoil profile, which is essential for optimal aerodynamic performance. A precise placement of the spar cap in the rotor blade can maximize the rotor blade's ability to capture wind energy efficiently, enhancing the overall performance of the wind turbine.

A precise placement of the spar cap in the rotor blade can contribute to an overall balance of the rotor blade, reducing vibrations during its operation. This extends the lifespan of the rotor blade and minimizes the noise generated by the rotor blade during its operation.

By arranging the clipping layer on the top face of the stack it can be avoided that the clipping layer creates deformations of the stack, in particular so-called undulations. If the clipping layer was in added in the middle of the stack of on the bottom face of the stack, layers of fiber material would be placed above the clipping layer which protrude sideways beyond the clipping layer. This would create a deformation of the otherwise flat fiber material layers, resulting in undulations of the stack. It is crucial that spar caps are free from undulations as only spar caps free from undulations can transfer forces reliably.

The clipping layer may comprise one or more layers of bidirectional fiber material. For the clipping layer, all kinds of fiber materials may be used, for example, the clipping layer may comprise tri-axial fiber material.

The clipping layer may also be a prefabricated part comprising glass fiber reinforced plastic (GFRP). The clipping layer may be formed as a tab. A tab is typically a flat or slightly curved part used for connecting, reinforcing, or fastening other components. The clipping layer may be incorporated into the resin infusion or may be fixed in another manner to the top face of the stack, e.g., by gluing or by laminating.

In one embodiment, the stack of fiber material layers and the clipping layer are infused with resin. The stack of fiber material layers and the clipping layer can be enclosed in a vacuum foil before the resin infusion and the resin infusion can be made under a vacuum atmosphere. The stack of fiber material layers and the clipping layer are fixed together permanently by the resin infusion. As it is common to form a spar cap by resin infusion of a stack of fiber material layers, no additional manufacturing step is required for fixing the clipping layer to the stack of fiber material layers.

As an alternative, a clipping layer formed as a prefabricated part comprising glass fiber reinforced plastic may be fixed to the top face of the stack by gluing or laminating after the stack is infused with resin.

In one embodiment, the clipping layer forms a fixing element configured to fix the spar cap in a mold. The protruding part of the clipping layer can be configured to be clamped between a clamping device and a clamping surface of the mold.

In one embodiment, a chordwise cross sectional shape of the clipping layer is complementary to a chordwise cross sectional shape of a protrusion forming an edge of the mold. This may allow the clipping layer to smoothly abut the protrusion on the mold, thereby further improving the precision with which the spar cap is positioned in the mold.

In one embodiment, the spar cap is a trailing edge spar cap. A trailing edge spar cap is arranged either directly at the trailing edge of a half shell of the rotor blade or in close proximity to the trailing edge of the half shell. Preferably, the spar cap forms the trailing edge at least in a section (region) between the root end of the half shell and the tip end of the half shell.

A second aspect concerns a set for manufacturing a half shell of a wind turbine rotor blade. The half shell manufactured with this set may comprise the spar cap described above with respect to the first aspect. The embodiments described above with respect to first aspect analogously apply to the second aspect.

The set comprises a mold comprising a layup surface and a protrusion which defines an edge of the mold. The set further comprises at least one block which is configured to be arranged on the protrusion to elevate a height of a part of the protrusion.

The half shell manufactured with this set may differ in its dimensions along the longitudinal direction. The block can be used to adapt a height of the protrusion to a shape of the half shell. For example, a trailing edge spar cap of the half shell may have a greater height than the protrusion when the spar cap is layed up into the mold. The block may allow to adjust the height of the protrusion such that an end face of the trailing edge spar cap can be flush with a top face of the protrusion. Thereby, the block may facilitate to fix the trailing edge spar cap to the mold during the manufacturing process.

The layup surface can be configured for laying up the elements of the half shell, for example main laminates, spar caps, fiber material layers, core material, shear webs etc.

In one embodiment, the protrusion ranges in a longitudinal direction from a root end of the mold to a tip end of the mold, wherein the block has a length in the longitudinal direction which is a fraction of the length of the protrusion. For example, the length of the block in the longitudinal direction may be less than one percent of the length of the protrusion in the longitudinal direction. The block may be used to provide a surface which a clipping layer abuts. As the clipping layers have a relative small extension in the lateral direction, the block can also have a small extension in the lateral direction. For example, the block may have a length in the range of 3 cm to 30 cm, preferably, in the range of 5 cm to 20 cm.

In one embodiment, the set comprises multiple blocks which are configured to be arranged on the protrusion to elevate a height of parts of the protrusion, wherein at least two of the multiple blocks differ in their height. The height of the half shell resp. the spar cap may extend beyond the protrusion at least in one section along the longitudinal direction. Towards the tip end, the half shell becomes narrower and smaller. Thus, a height by which the half shell extends over the protrusion may become smaller towards the tip end. In order to match the height of the protrusion to the height of the half shell resp. spar cap over the entire length of the half shell, blocks of different heights are required.

A third aspect concerns an assembly comprising a spar cap and a mold. The spar cap may be the above-described spar cap of the first aspect. The mold may be part of the above-described set of the second aspect. The embodiments described above with respect to first and second aspect analogously apply to the third aspect.

In the assembly, the mold comprises a layup surface and a protrusion which defines an edge of the mold. At least one block is arranged on the protrusion in a part of the protrusion in which a clipping layer is located. The spar cap is configured to be arranged in the mold such that an end face of the stack is flush with the protrusion and/or the block and the clipping layer protrudes beyond the protrusion and/or the block.

The protrusion can either be flush with the end face of the stack without a block, or a block can be used to elevate the protrusion such that it is flush with the top face of the stack.

The end face of the stack may be perpendicular to the top face and to the bottom face of the stack. The end face of the stack may face to the trailing edge of the half shell.

The assembly may allow to construct a half shell in which the trailing edge spar cap is placed with a high precision and in which deformations, in particular an undulation, of the trailing edge spar cap can be avoided.

In one embodiment, the assembly further comprises a clamping device, which is configured to fix the part of the clipping element which protrudes beyond the protrusion and/or block to the mold. This contributes to the above-mentioned functions and advantages.

In one embodiment, the assembly is configured such that a position of the spar cap in the mold is maintained by the clamping device fixing the part of the clipping element which protrudes beyond the protrusion and/or block to the mold. This contributes to the above-mentioned functions and advantages.

In one embodiment, the spar cap comprises multiple clipping layers, each clipping layer being arranged at a different position along a longitudinal direction of the spar cap and each clipping layer protruding beyond the protrusion and/or block, wherein the clamping device is configured to fix the part of each of the clipping element which protrudes beyond the protrusion to the mold. For each of the clipping layers, exactly one block may be provided on the protrusion. This contributes to the above-mentioned functions and advantages.

According to one embodiment, a height of the spar cap is greater than a height of the protrusion in at least a part of the mold, wherein the assembly comprises multiple blocks, each block being configured to be arranged on the protrusion to elevate the protrusion in a location in which one of the clipping layers is arranged. A height of the blocks is chosen such, that a top surface of the blocks is flush with an end face of the spar cap. This contributes to the above-mentioned functions and advantages.

According to a fourth aspect, a method of manufacturing a half shell of a wind turbine rotor blade is proposed. The half shell may comprise the spar cap described above with respect to the first aspect and for the method, the set of the second aspect and the assembly of the third aspect may be used. The embodiments described above with respect to first to third aspect analogously apply to the fourth aspect.

The method comprises the steps of:
i. manufacturing a spar cap comprising a stack of fiber material layers, which are stacked in a stacking direction from a bottom face to a top face, and a clipping layer, which is arranged on the top face of the stack such that the clipping layer protrudes beyond the stack of fiber material layers in a lateral direction which is perpendicular to the stacking direction,
ii. providing a mold, wherein the mold comprises a layup surface and a protrusion which defines an edge of the mold,
iii. placing a block on the protrusion at a position at which the clipping layer will be located, wherein the block elevates the protrusion,
iv. arranging the spar cap in the mold, wherein the spar cap is arranged such that an end face of the stack is flush with the protrusion and/or the blocks and such that the clipping layer protrudes beyond the protrusion and/or the blocks,
v. fixing the part of the clipping element which protrudes beyond the protrusion at the mold.

Multiple clipping layers can be provided on the spar cap in step i. Multiple blocks may be placed on the protrusion in step iii., each block being placed at a position at which a clipping layer will be located. The blocks can differ in their height, wherein a height of the blocks is reduced towards the tip end of the spar cap.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a rotor blade,
Figure 3 shows a schematic view of a cross-section of the wind turbine rotor blade,
Figure 4 shows a schematic top view on a wind turbine rotor blade,
Figure 5 shows a schematic view of a spar cap,
Figure 6 shows a cross-sectional view of the spar cap shown in Figure 5,
Figure 7 shows the manufacturing process of a half shell,
Figure 8 shows a set comprising a block being arranged on a protrusion of a mold,
Figure 9 shows the set of Figure 8 and a spar cap arranged in the mold,
Figure 10 shows another block being arranged on the protrusion of the mold,
Figure 11 shows a flow chart of a method of manufacturing a half shell of a wind turbine rotor blade.

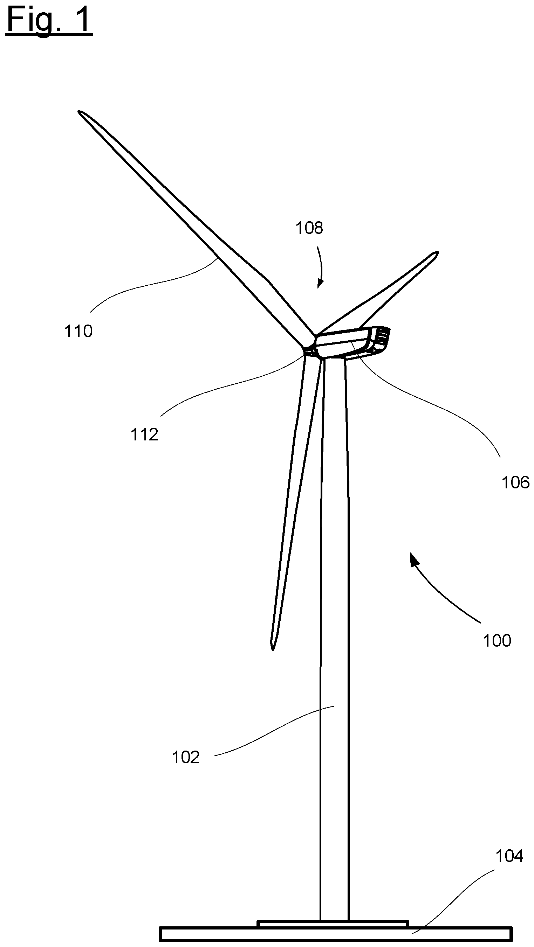

Figure 1 shows a schematic view of a wind turbine 100, which comprises a tower 102. The tower 102 is fixed to the ground by means of a foundation 104. A nacelle 106 is rotatably mounted at one end of the tower 102, opposite to the ground. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

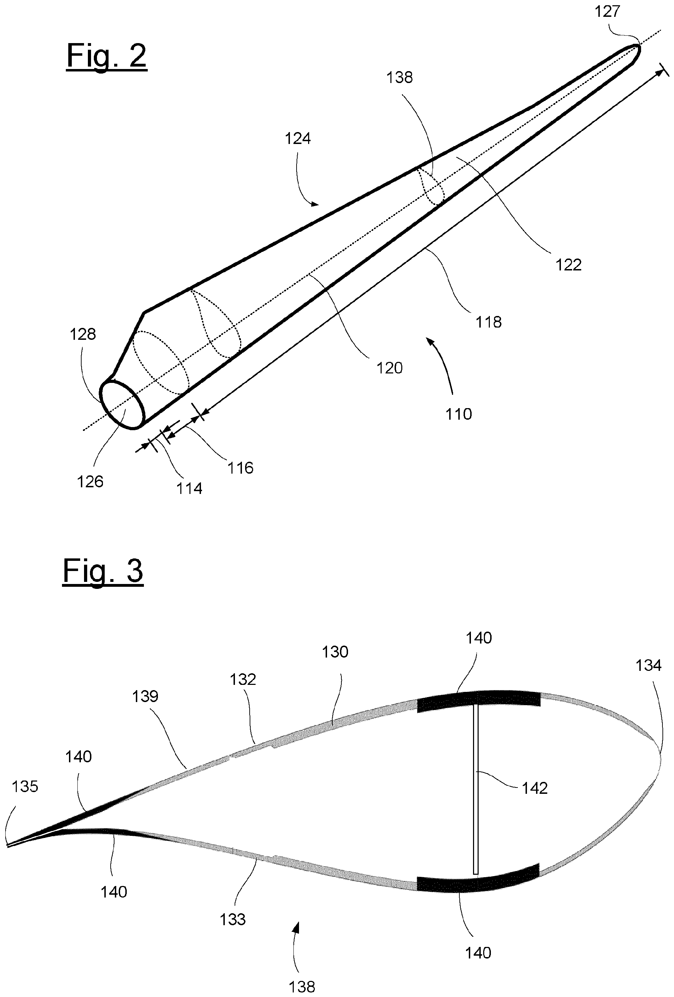

Figure 2 shows an exemplary rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of the rotor blade 110. The rotor blade 110 has a pressure side 122 and an opposite suction side 124 extending along a longitudinal direction 120 (also main extension direction). The rotor blade 110 is essentially hollow inside.

In the rotor blade root area 114 a rotor blade root end 126 with a flange connection 128 is provided, by means of which the rotor blade 110 can be mechanically connected to a pitch bearing or an extender. The rotor blade 110 can be a segmented rotor blade.

Figure 3 shows a schematic cross-section profile 138 (see Figure 2) of the wind turbine rotor blade 110 running traverse to the longitudinal direction 120. The rotor blade 110 has an aerodynamic shell 130 comprising two half shells, i.e., a pressure side half shell 133 and a suction side half shell 132. The two half shells 132, 133 are firmly connected to each other along the longitudinal axis at opposite connecting surfaces located at the leading edge 134 and trailing edge 135.

Each half shell 132, 133 comprises a shell-structure which comprises a shell laminate 139 and two spar caps 140, i.e., a primary spar cap and a trailing edge spar cap. The shell laminate 139 includes a core material which is sandwiched between one or more layers of a laminate.

The spar caps 140 are embedded in the shell-structure. A spar cap 140 can also be generally named "main laminate" and carries main loads during operation of the rotor blade 110. Each of the spar caps 140 comprises a stack 141 of fiber layers, which are placed on top of each other during manufacture according to a specific layup pattern. After the layup, the fiber layers are infused with resin and cured afterwards to form the rigid structural spar cap 14140. For the fiber layers, raw material is utilized, e.g. fibrous material layers or semi-finished products like pultruded planks made from a fiber reinforced plastics material. Each of the spar caps 140 can be manufactured as a prefabricated part or as an integral part of a rotor blade shell 130 during the shell manufacture.

The rotor blade 110 comprises a shear web 142. The shear web 142 connects the primary spar cap 140 of the pressure side half shell 132 to the primary spar cap 140 of the suction side half shell 133. The two primary spar caps 140 and the shear web 142 form a primary load-carrying structural member.

In an alternative embodiment, the rotor blade 110 additionally comprises a second shear web which connects the trailing edge spar caps 140 to each other.

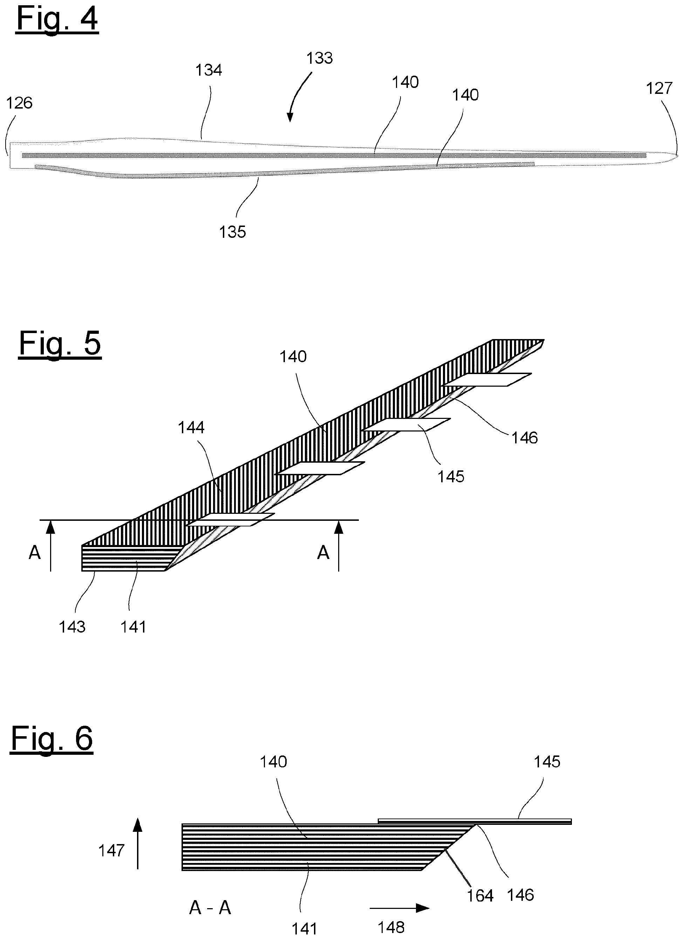

Figure 4 shows a schematic top view of a wind turbine rotor blade 110, which has two spar caps 140 in each of the rotor blade half shells 132, 133. In Figure 4, the pressure side half shell 133 comprising the primary spar cap 140 and the trailing edge spar cap 140 is visible.

All of the spar caps 140 extend along the longitudinal direction 120 of the wind turbine rotor blade 110, wherein the trailing edge spar cap 140 of the pressure side half shell 133 and the trailing edge spar cap 140 of the suction side half shell 132 extend closely along the trailing edge 135, at least in a section (or portion) between the root end 126 and a tip end 127.

In a part of the rotor blade 110, the trailing edge 135 is formed by the two trailing edge spar caps 140 and an adhesive joint between the trailing edge spar caps 140. In this part, the trailing edge spar caps 140 are arranged directly at the trailing edge 135. By arranging the trailing edge spar caps 140 directly at the trailing edge 135 a secondary load path along the trailing edge 135 of the wind turbine rotor blade 110 is formed, which stabilizes the trailing edge 135 particularly in edgewise load cases. Moreover, the trailing edge spar caps 140 create the majority of edgewise stiffness of the wind turbine rotor blade 110.

Figure 5 shows a spar cap 140 according to the present invention in a perspective view. Figure 6 shows a cross-sectional view of a spar cap 140 shown in Figure 5 taken along the line AA. The spar cap 140 shown in Figures 5 and 6 is a trailing edge spar cap. Figures 5 and 6 show the spar cap 140 as a prefabricated part before it is integrated into the shell structure of a half shell.

The spar cap 140 comprises a stack 141 of fiber material layers which are stacked in a stacking direction 147 from a bottom face 143 of the spar cap 140 to a top face 144 of the spar cap 140.

On the top face 144 of the spar cap 140, multiple clipping layers 145 are arranged. The clipping layers 145 may comprise one or more layers of a bidirectional fiber material or of another fiber material. Alternatively, the clipping layer may comprise glass fiber reinforced plastic.

The clipping layers 145 are arranged at a regular interval along the trailing edge 146 of the spar cap 140. Each clipping layer 145 protrudes beyond the trailing edge 146 of the spar cap 140 in a lateral direction 148. The lateral direction 148 corresponds to the chordwise direction when the spar cap 140 is integrated in a rotor blade 110. The lateral direction 148 is perpendicular to the stacking direction 147 of the stack 141 of fiber material layers and the lateral direction 148 is substantially perpendicular to a longitudinal direction 120, wherein the longitudinal direction 120 is the direction in which the spar cap 140 has the longest extension. For example, the lateral direction 148 and the longitudinal direction 120 may enclose an angle in the range of 75 ° to 105 °, preferably, the two directions are perpendicular to each other.

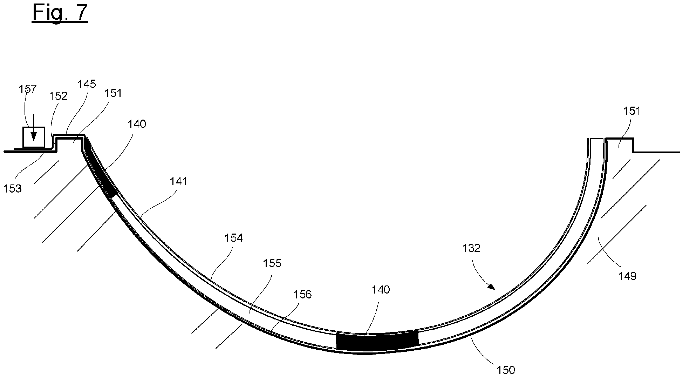

The stack 141 of fiber material layers and the clipping layer 145 are infused with resin and cured and thereby fixed to each other. The clipping layer 145 forms a fixing element which is used to fix the spar cap in a mold 149 when manufacturing the rotor blade 110 (see Figure 7).

In the finalized rotor blade 110, the part of the clipping layer 145 which protrudes beyond the stack 141 of fiber material layers of the spar cap 140 is removed. The clipping layer 145 has a length in the lateral direction 148 which is in the range between 200 and 300 mm.

Figure 5 shows that multiple clipping layers 145 are arranged along the trailing edge 146 of the spar cap 140. The clipping layers 145 which are arranged close to the root end of the spar cap 140 comprise more layers of a bidirectional fiber material than those clipping layers 145 arranged close to a tip end of the spar cap 140. At the root end, the stack 141 of fiber material layers comprises more layers than in a region close to the tip end. Thus, in the region close to the root end, stronger clipping layers 145 are required for fixing the spar cap 140 in the mold 149, i.e., clipping layers 145 with more layers.

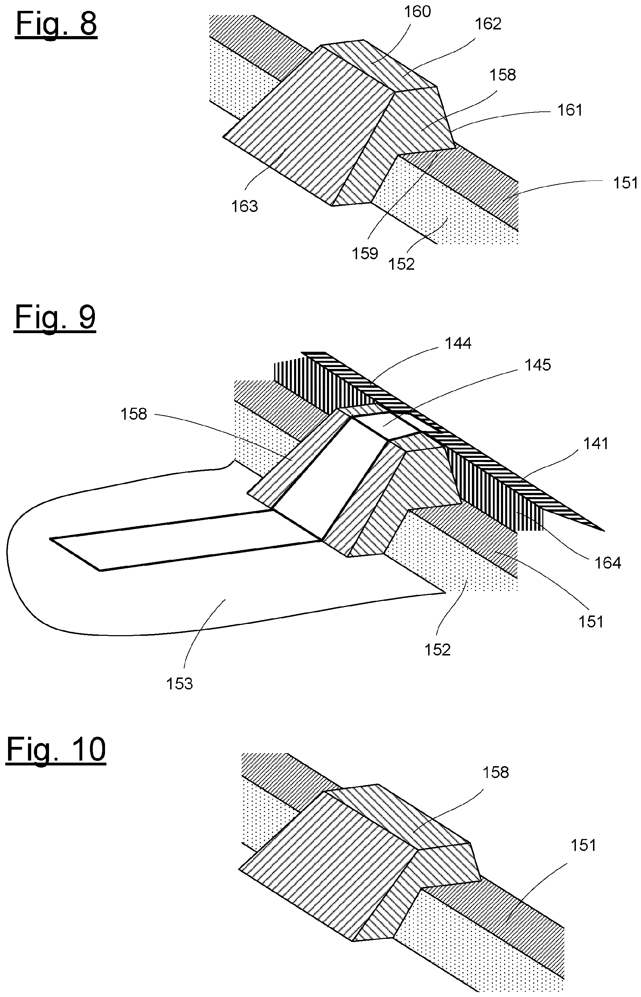

An end face 164 of the stack is arranged at the trailing edge 145. The end face 164 is tapered with respect to the stacking direction of the stack. As shown in Figures 7 and 9, this allows the end face 164 to abut the mold 149 or a tapered inwardly facing surface 161 of a block 158.

Figure 7 shows a half shell 132 of a wind turbine rotor blade 110 during its manufacturing. For manufacturing the half shell 132 of the wind turbine rotor blade 110, a mold 149 is used which comprises a layup surface 150 and two protrusions 151 defining edges of the mold 149. One of the protrusions 151 defines an edge which corresponds to the trailing edge 135 of the half shell 132 and the other protrusion 151 defines an edge which corresponds to the leading edge 134 of the half shell 132.

In an outward direction away from the layup surface 150, the mold 149 comprises a step 152 and a clamping surface 153 which are adjacent to the protrusion 151. In an alternative embodiment, the step 152 may be omitted and the protrusion 151 may be used as a clamping surface.

Each element of the half shell 132 is subsequently arranged on the layup surface 150 of the mold 149. In particular, an outer laminate layer 156, a core material 155 and an inner laminate layer 154 are subsequently arranged on the layup surface 150 of the mold 149, thereby forming a shell structure of the half shell 132. Additionally, prefabricated parts, i.e., the primary spar cap 140 and the trailing edge spar cap 140, are arranged on the layup surface of the mold, wherein the spar caps 140 are adjacent to the core material 155.

The trailing edge spar cap 140 is arranged in the mold 149 such that the trailing edge of the stack 141 of fiber material layers matches the contour of the the stack 141 of fiber material layers protrusion 151. The clipping layer 145 protruding beyond is arranged on the protrusion 151 and extends beyond the protrusion 151. The clipping layer 145 is also arranged on the clamping surface 153 of the mold 149.

As indicated in Figure 7, a clamping device 157 fixes the part of the clipping layer 145 which protrudes beyond the protrusion 151 to the mold 149. For example, the clipping layer 145 is clamped between the clamping device 157 and the clamping surface 153 of the mold 149. This allows the trailing edge spar cap 140 to be fixed at its position before the trailing edge spar cap 140 is fixed to the shell structure of the half shell 132, for example by resin infusion.

By providing the clipping layer 145 which is fixed to the mold 149 via clamping, it can be ensured that accidental movements of the trailing edge spar cap 140 relative to the mold 149 are prevented. Thus, the clipping layer 145 enables to position the trailing edge spar cap 140 in the half shell 132 with a high precision.

The half shell 132 is manufactured by (vacuum) resin infusion wherein the elements arranged on the mold 149 are fixed to each other. Afterwards, the protruding part of the clipping layer 145 is removed in a trimming operation. In the trimming operation, a grinder, for example an electrical or pneumatic grinder, is used to remove the protruding part of the clipping layer 145.

In the embodiment shown in Figure 7, the protrusion 151 of the mold 149 is flush with an end face 164 of the stack 141 of fiber material layers. The bottom face 143 of the stack 141 lays against the layup surface 150 of the the mold 149.

In an alternative embodiment, at another length position of the half shell (not shown), the protrusion 151 is not flush with the end face 164 of the stack 141 and instead the end face of the stack 141 may be higher than the protrusion 151 and may, therefore, protrude beyond the protrusion 151. In order to elevate the height of the protrusion 151 such that the protrusion 151 becomes flush with the end face 164 of the stack 141, a block 158 is arranged on the protrusion 151. In particular, the block 158 is arranged on a part of the protrusion 151 in which the clipping layer 145 is located.

Figure 8 shows the block 158 arranged on a part of the protrusion 151. In Figure 8, the spar cap 140 comprising the clipping layer 145 is not shown. The spar cap 140 will be arranged on the layup surface 150 of the mold 149 wherein the position of the block 158 is chosen such that clipping layer 145 is arranged on the block 158.

The shape of the block 158 is adapted to the shape of the mold 149. The block 158 comprises a bottom surface 159 which faces towards the mold 149. The shape of the bottom surface 159 of the block 158 matches the shapes of the protrusion 151, the step 152 and the clamping surface 153 of the mold 149.

The block 158 comprises a top surface 160 which is opposite of the bottom surface 159. The top surface 160 of the block 158 comprises three surfaces, a tapered inwardly facing surface 161, a surface 162 parallel to the protrusion 151 and a tapered outwardly facing surface 162. A height of the block 158 is measured from the upper surface of the protrusion 151 to the part of top surface 160 of the block 158 which is parallel to the protrusion 151.

Figure 9 shows the mold 149 shown in Figure 8 after the spar cap 140 is arranged in the mold 149. When the spar cap 140 is arranged in the mold 149, the end face 164 of the stack 141 of fiber layers abuts the tapered inwardly facing surface 161 of the block 158. The top face 144 is flush with the surface 162 of the block 158. The bottom face 143 of the spar cap 140 is laying on the layup surface 150 of the mold 149 (not visible). The clipping layer 145 locted on the top face 144 of the stack 141, is arranged on the surface 162 of the block 158 running parallel to the protrusion 151 and on the tapered outwardly facing surface 163. The clipping layer 145 extends beyond the block and is additionally arranged on the clamping surface 153. The clipping layer 145 is cured and corresponds to the shape of the protrusion 151.

The clipping layer 145 may be temporarily fixed to the mold by a clamping device 157 pressing the clipping layer 145 onto the the clamping surface 153 as shown in Figure 7. Alternatively, the clamping device 157 may fix a part of the clipping layer 145 which rests on the surface 162 of the block 158 running parallel to the protrusion 151.

Figure 10 shows another block 158 on the protrusion 151 of the mold 149. The block 158 shown in Figure 10 is arranged further towards the tip end of the mold 149 than the block 158 shown in Figure 8. The block 158 shown in Figure 10 comprises a lower height compared to the block 158 shown in Figure 8. Along the longitudinal direction 120 from the root end of the half shell 132 towards the tip end of the half shell 132, a height of the spar cap 140 descends. To match the height of the protrusion 151 to the height of the spar cap 140, the blocks 158 arranged on the protrusion 151 differ in their height. The blocks 158 close to the root end have the highest height and the height of the blocks 158 is reduced more and more towards the tip end of the protrusion 151. It is also conceivable that no blocks 158 are arranged in a region close to the tip end as the spar cap 140 is flush with the protrusion 151 without blocks 158 close to the tip end.

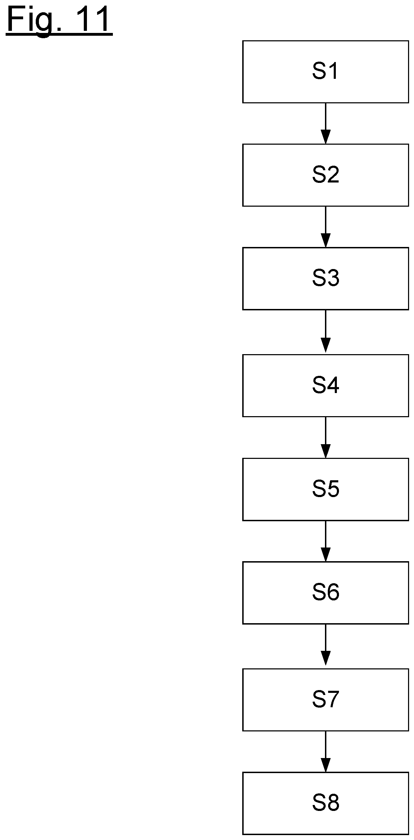

Figure 11 shows a flow chart of a method for manufacturing a wind turbine rotor blade 110.

In a first step S1, a spar cap 140 comprising a stack 141 of fiber material layers which are arranged in a stacking direction 147 from a bottom face 143 to a top face 144 is manufactured. The spar cap 140 further comprises a clipping layer 145 arranged on the top face 144 of the stack 141 such that the clipping layer 145 protrudes beyond the stack 141 of fiber material layers in a lateral direction 148 which is perpendicular to the to the stacking direction 147. For example, the spar cap 140 as manufactured in step S1 may be the same spar cap as the spar cap shown in Figures 5 and 6.

In a subsequent second step S2, a mold 149 is provided. The mold 149 comprises a layup surface 150 and a protrusion 151 defining an edge of the mold 149. The mold 149 provided in step S2 may correspond to the mold shown in Figure 7.

In a third step S3, a block 158 is placed on the protrusion 151 of the mold 149 at the position at which the clipping layer 141 will be located. The block 158 elevates the protrusion 151. In step S3, multiple blocks 158 may be arranged at different positions along the longitudinal direction 120 of the protrusion 151. The blocks 158 arranged on the protrusion 151 in step S3 are shown, for example in Figures 8 and 10.

In a subsequent fourth step S4, the spar cap 140 is arranged in the mold 149. The spar cap 140 is arranged such that the top face 144 of the stack 141 is flush with the protrusion 151, which may be elevated by a block 158, and such that the clipping layer 145 protrudes beyond the protrusion 151, which may be elevated by a block 158. The spar cap 140 being arranged in the mold 149 is shown, for example, in Figures 7 and 9.

Figure 7 shows an embodiment wherein no block 158 is provided on the protrusion 151 of the mold 149 and wherein the stack 141 is flush with the protrusion 151. Figure 9 shows an embodiment wherein a block 158 is arranged on the protrusion 151 at the position at which the clipping layer 145 will be arranged and wherein the end face 164 of the stack 141 abuts the block 158.

In a subsequent fifth step S5, the part of the clipping layer 145 which protrudes beyond the protrusion 151 of the mold 149 is fixed at the mold 149. For example, Figure 7 shows the fixation of the clipping layer 145 to a clamping surface 153 of the mold 149 by a clamping device 157.

In a sixth step S6, further laminate layers and a core material are arranged on the layup surface, thereby providing a shell structure.

In a seventh step S7, the spar cap is fixed to the shell structure, e.g., by resin infusion and curing, thereby forming a half shell.

Steps S1 to S7 are repeated to manufacture a second half shell.

In an eighth step S8, the two half shells are fixed to each other, e.g., via adhesive connections at the trailing edge and at the leading edge.

### Reference numbers

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal direction
- 122: pressure side
- 124: suction side
- 126: root end
- 127: tip end
- 128: flange connection
- 130: shell
- 132: suction side half shell
- 133: pressure side half shell
- 134: leading edge
- 135: trailing edge of the rotor blade
- 138: cross-sectional profile
- 139: shell laminate
- 140: spar cap
- 141: stack of fiber layers
- 142: shear web
- 143: bottom face
- 144: top face
- 145: clipping layer
- 146: trailing edge of the spar cap
- 147: stacking direction
- 148: lateral direction / chordwise direction
- 149: mold
- 150: layup surface
- 151: protrusion
- 152: step
- 153: clamping surface
- 154: inner laminate layer
- 155: core material
- 156: outer laminate layer
- 157: clamping device
- 158: block
- 159: bottom surface
- 160: top surface
- 161: inwardly facing surface
- 162: parallel surface
- 163: outwardly facing surface
- 164: end face

## Claims

1. Spar cap (140) for a wind turbine rotor blade (110), comprising
- a stack (141) of fiber material layers, which are stacked in a stacking direction (147) from a bottom face (143) to a top face (144), and
- a clipping layer (145) which is arranged on the top face (144) of the stack (141), wherein the clipping layer (145) protrudes beyond the stack (141) of fiber material layers in a lateral direction (148) which is perpendicular to the stacking direction (147).

2. Spar cap (140) according to the preceding claim,
wherein the stack (141) of fiber material layers and the clipping layer (145) are infused with resin.

3. Spar cap (140) according to any one of the preceding claims,
wherein the clipping layer (145) forms a fixing element configured to fix the spar cap (140) in a mold (149).

4. Spar cap (140) according to claim 3,
wherein a chordwise cross sectional shape of the clipping layer (145) is complementary to a chordwise cross sectional shape of a protrusion (151) forming an edge of the mold (149) .

5. Spar cap (140) according to any one of the preceding claims,
wherein the spar cap (140) is a trailing edge spar cap (140).

6. Set for manufacturing a half shell of a wind turbine rotor blade (110), comprising
- a mold (149) comprising a layup surface (150) and a protrusion (151) which defines an edge of the mold (149), and
- at least one block (158) which is arranged on the protrusion (151) to elevate a height of a part of the protrusion (151).

7. Set according to claim 6,
wherein the protrusion (151) ranges in a longitudinal direction from a root end of the mold (149) to a tip end of the mold (149), and
wherein the block (158) has a length in the longitudinal direction which is a fraction of the length of the protrusion (151) .

8. Set according to the claim 6 or claim 7,
comprising multiple blocks (158) which are arranged on the protrusion (151) to elevate a height of parts of the protrusion (151),
wherein at least two of the multiple blocks (158) differ in their height.

9. Assembly comprising a spar cap (140) according to any one of the claims 1 to 5 and a mold (149),
wherein the mold (149) comprises a layup surface (150) and a protrusion (151) which defines an edge of the mold (149),
wherein at least one block (158) is arranged on the protrusion (151) in a part of the protrusion (151) in which a clipping layer (145) is located,
wherein the spar cap (140) is configured to be arranged in the mold (149) such that the top face (144) of the stack (141) is flush with the protrusion (151) and/or the block (158) and the clipping layer (145) protrudes beyond the protrusion (151) and/or the block (158).

10. Assembly according to claim 9,
wherein the assembly further comprises a clamping device (157), which is configured to fix the part of the clipping element which protrudes beyond the protrusion (151) and/or the block (158) to the mold (149).

11. Assembly according to claim 10,
wherein the assembly is configured such that a position of the spar cap (140) in the mold (149) is maintained by the clamping device (157) fixing the part of the clipping element which protrudes beyond the protrusion (151) and/or the block (158) to the mold (149).

12. Assembly according to any one of claims 9 to 11,
wherein the spar cap (140) comprises multiple clipping layers (145), each clipping layer (145) being arranged at a different position along a longitudinal direction of the spar cap (140) and each clipping layer (145) protruding beyond the protrusion (151) and/or the block (158), and
wherein the clamping device (157) is configured to fix the part of each of the clipping element which protrudes beyond the protrusion (151) and/or the block (158) to the mold (149) .

13. Assembly according to claim 12,
wherein a height of the spar cap (140) is greater than a height of the protrusion (151) in at least a part of the mold (149),
wherein the assembly comprises multiple blocks (158), each block (158) being configured to be arranged on the protrusion (151) to elevate the protrusion (151) in a location in which one of the clipping layers (145) is arranged,
wherein a height of the blocks (158) is chosen such that a top surface of the blocks (158) is flush with an end face (164) of the spar cap (140).

14. Assembly according to claim 13,
wherein the end face (164) defines a trailing edge of the spar cap (140) at least in a section between a root end and a tip end of a half shell (132, 133).

15. Method of manufacturing a half shell of a wind turbine rotor blade (110),
comprising the steps of:
i. manufacturing a spar cap (140) comprising a stack (141) of fiber material layers, which are stacked in a stacking direction (147) from a bottom face (143) to a top face (144), and a clipping layer (145), which is arranged on the top face (144) of the stack (141) such that the clipping layer (145) protrudes beyond the stack (141) of fiber material layers in a lateral direction (148) which is perpendicular to the stacking direction (147),
ii. providing a mold (149), wherein the mold (149) comprises a layup surface (150) and a protrusion (151) which defines an edge of the mold (149),
iii. placing a block (158) on the protrusion (151) at a position at which the clipping layer (145) will be located, wherein the block (158) elevates the protrusion (151),
iv. arranging the spar cap (140) in the mold (149), wherein the spar cap (140) is arranged such that the top face (144) of the stack (141) is flush with the protrusion (151) and/or the blocks (158) and such that the clipping layer (145) protrudes beyond the protrusion (151) and/or the blocks (158),
v. fixing the part of the clipping element which protrudes beyond the protrusion (151) at the mold (149).
